# EUROPÄISCHE PATENTSCHRIFT

(11) **EP 1 633 994 B1**
(45) Veröffentlichungstag und Bekanntmachung des Hinweises auf die Patenterteilung: **02.11.2006**
(21) Anmeldenummer: 04733558.3
(22) Anmeldetag: 18.05.2004
(51) Int. Cl.: F16H 3/54

(54) **PLANETENGETRIEBE**
PLANETARY TRANSMISSION
TRANSMISSION A ENGRENAGES PLANETAIRES

(30) Priorität: 13.06.2003 DE 10326677
(43) Veröffentlichungstag der Anmeldung: 15.03.2006
(73) Patentinhaber: ZF FRIEDRICHSHAFEN AG, 88038 Friedrichshafen (DE)
(72) Erfinder: BADER, Josef, 88045 Friedrichshafen (DE)
(86) Internationale Anmeldenummer: PCT/EP2004/005331
(87) Internationale Veröffentlichungsnummer: WO 2004/111493

(56) Entgegenhaltungen:
- DD-A- 285 813
- DE-A- 2 148 090
- DE-B- 1 198 213
- GB-A- 191 268
- GB-A- 415 531
- US-A- 4 189 960
- US-A- 4 347 762

## Beschreibung

Die Erfindung betrifft ein Planetengetriebe nach dem Oberbegriff von Anspruch 1. Aus der US 4 347 762 ist ein Planetengetriebe mit den Merkmalen des Oberbegriffes des Anspruches 1 bekannt.

Nutzfahrzeuggetriebe mit einer hohen Anzahl an Gangstufen weisen häufig ein an das Hauptgetriebe mit seinen Gangstufen angeschlossenes Bereichsgruppengetriebe auf. Mit einem Bereichsgruppengetriebe lässt sich die Gesamtübersetzung des Hauptgetriebes vergrößern, indem alle Gangstufen des Hauptgetriebes mit jeder Gangstufe des Bereichsgruppengetriebes zusammen genutzt werden können und in wenigstens einer Gangstufe des Bereichsgruppengetriebes die Übersetzung der Gangstufen des Hauptgetriebes untersetzt bzw. übersetzt wird.

Ein Bereichsgruppengetriebe für Kraftfahrzeuge ist beispielsweise aus der DE 41 21 709 A1 bekannt geworden. Mit einem derartigen, dem Hauptgetriebe nachgeschalteten Planetengetriebe besteht die Möglichkeit, das Kraftfahrzeug im Rahmen seiner Gangstufen des Hauptgetriebes jeweils in zwei unterschiedlichen Geschwindigkeitsbereichen zu betreiben. In einer ersten ins Langsame übersetzten Schaltstufe des Bereichsgruppengetriebes ist das.Hohlrad des Planetengetriebes über eine Schaltkupplung an das Getriebegehäuse gekuppelt, so dass die Abtriebswelle des Bereichsgruppengetriebes eine geringere Drehzahl als die Ausgangswelle des Hauptgetriebes aufweist. In einer zweiten Schaltstufe erfolgt ein direkter Durchtrieb von der Ausgangswelle des Hauptgetriebes auf die Abtriebswelle des Bereichsgruppengetriebes, wobei über eine Schaltkupplung die direkte Verbindung zwischen der Ausgangswelle des Hauptgetriebes und der Ausgangswelle des Bereichsgruppen hergestellt wird. Die Schalteinrichtung ist sehr aufwendig gestaltet.

Die DE 198 51 895 A1 beschreibt ein weiteres als Planetengetriebe ausgebildetes Bereichsgruppengetriebe. Dabei ist das Hohlrad des Planetengetriebes drehfest mit dem Getriebegehäuse verbunden. Das Sonnenrad des Planetengetriebes ist koaxial zur Ausgangswelle des Hauptgetriebes und gegenüber der Ausgangswelle des Hauptgetriebes frei drehbar angeordnet. Zur Bildung eins Untersetzungsverhältnisses zwischen der Ausgangswelle des Hauptgetriebes und der Ausgangswelle des Bereichsgruppengetriebes kann das Sonnenrad drehfest mit der Ausgangswelle des Hauptgetriebes verbunden werden. Auch dieses Planetengetriebe ist aufwendig und problematisch bei der Lagerung einzelner Bauteile.

Der Erfindung liegt die Aufgabe zugrunde ein Planetengetriebe und insbesondere die Bauteillagerung zu verbessern.

Die Aufgabe wird gelöst durch ein Planetengetriebe mit den Merkmalen des Anspruchs 1. Ausgestaltungen sind Gegenstand von Unteransprüchen.

Ein Planetengetriebe, das ein Hohlrad, ein Sonnenrad und einen Planetenträger umfasst, auf dem wenigstens ein Planetenrad gelagert ist, weist eine Schalteinrichtung mit einer Schiebemuffe auf, die in einer Schaltstellung eine direkte Verbindung zwischen einer das Planetengetriebe antreibenden Welle und einer Ausgangswelle des Planetengetriebes ermöglicht. In einer anderen Schaltstellung ermöglicht die Schalteinrichtung eine Drehzahländerung zwischen der antreibenden Welle und der Ausgangswelle des Planetengetriebes. Das Planetenrad ist auf dem Planetenträger derart gelagert, dass bei einer Schaltung von der einen Schaltstellung in die jeweils andere Schaltstellung das Planetenrad auf dem Planetenträger axial verschiebbar ist. Üblicherweise sind in einem derartigen Planetengetriebe drei oder fünf Planetenräder auf dem Umfang verteilt angeordnet.

Vorzugsweise ist das Planetenrad relativ zu dem Hohlrad und zu dem Sonnenrad axial fixiert, so dass eine axiale Verschiebung des Planetenrades eine gleichzeitige axiale Verschiebung von Hohlrad und Sonnenrad ermöglicht.

Bei einer besonders vorteilhaften Ausgestaltungsform legt das Planetenrad bei einer Verschiebung des Planetenrades von der einen Schaltstellung in die jeweils andere Schaltstellung einen geringeren Verschiebeweg zurück als die das Planetenrad verschiebende Schiebemuffe.

In einer vorteilhaften Ausgestaltung ist die Schiebemuffe dazu geeignet, das Sonnenrad axial zu bewegen und damit das Planetenrad auf dem Planetenträger axial zu verschieben.

Eine Ausbildungsform zeigt das Sonnenrad mit einem Druckbolzen, der mit der Schiebemuffe zusammenwirkt, während in einer anderen Ausführung die Schiebemuffe und das Sonnenrad einteilig ausgebildet ist.

Vorzugsweise weisen sowohl das Hohlrad als auch das Sonnenrad Druckkämme auf, die an dem Planetenrad anliegen.

In einer Ausgestaltung weist die Schalteinrichtung eine Neutralstellung auf, die zwischen den beiden Schaltstellungen liegt und bei der die Ausgangswelle des Planetengetriebes nicht angetrieben wird.

Eine weitere vorteilhafte Gestaltungsform zeigt das Planetenrad auf dem Planetenträger in einer Rollenlagerung gelagert. Vorzugsweise umfasst dabei die Rollenlagerung ein mehrreihiges Lager. Die relative Lagerung des Sonnenrades und der antreibenden Welle des Planetengetriebes zueinander bildet ebenfalls eine Ausgestaltungsmöglichkeit.

Besonders vorteilhaft stellt das Planetengetriebe ein Bereichsgruppengetriebe eines Fahrzeuggetriebes dar, das in einem drehmomentübertragenden Antriebsstrang an ein Hauptgetriebe angeschlossen ausgebildet ist und bei dem die Ausgangswelle des Hauptgetriebes die antreibende Welle des Planetengetriebes bildet.

Ebenfalls als besonders vorteilhafte Ausführungsform umfasst das Hauptgetriebe zwei Vorgelegewellen und eine schwimmend zwischen den Vorgelegewellen gelagerte Hauptwelle, die als Ausgangswelle des Hauptgetriebes die Eingangswelle des Planetengetriebes bildet und die an ihrem Ende im Sonnenrad des Planetengetriebes gelagert ist.

Vorteilhaft umfasst die Lagerung des Endes der Hauptwelle einen Zapfen mit einem geschlitzten Profil.

Die Erfindung wird anhand einer Zeichnung näher erläutert.

Es zeigen:
- Fig. 1: ein Planetengetriebe mit einer ersten Schalteinrichtung in Neutralstellung;
- Fig. 2: die Schalteinrichtung nach Fig. 1 in einer ersten Schaltstellung;
- Fig. 3: die Schalteinrichtung nach Fig. 1 in einer zweiten Schaltstellung und
- Fig. 4: ein Planetengetriebe mit einer zweiten Schalteinrichtung in Neutralstellung.

Ein Schaltgetriebe 2 für ein Fahrzeug weist in einem Getriebegehäuse 4 ein Hauptgetriebe 6 und ein an das Hauptgetriebe 6 anschließendes Bereichsgruppengetriebe in Form eines Planetengetriebes 8 auf. Das Planetengetriebe 8 umfasst einen Planetenträger 10, der mit der Abtriebswelle 12 des Schaltgetriebes 2 als ein gemeinsames Bauteil ausgeführt ist. An der Abtriebswelle 12 ist ein Abtriebsflansch 14 befestigt und die Abtriebswelle 12 ist im Getriebegehäuse 4 in einer Lagerung 16 gelagert. Der Planetenträger 10 weist mehrere auf seinem Umfang verteilte Planetenbolzen 18 auf, von denen hier ein Planetenbolzen gezeigt ist. Auf dem Planetenbolzen 18 ist das Planetenrad 20 in einer Rollenlagerung 22 gelagert. Üblicherweise sind auf dem Umfang des Planetenträgers 10 drei oder fünf Planetenräder 20 verteilt angeordnet. Die Rollenlagerung 22 wird von einem zweireihigen Zylinderrollenlager oder Nadellager gebildet. Das Planetenrad 20 ist außen von einem Hohlrad 24 umgeben, das eine Schaltverzahnung 26 aufweist, die in eine Schaltverzahnung 28 an einer Abstützplatte 30 eingreifen kann. Die Abstützplatte 30 ist drehfest im Getriebegehäuse 4 gehalten. Dabei kann die Abstützplatte 30 in das Getriebegehäuse 4 eingegossen sein oder als separate Platte zwischen einzelnen Elementen des Getriebegehäuses 4 eingeklemmt sein. Eine Welle 32 dient dem möglichen Antrieb eines Nebenabtriebs und ist in einer Lagerung 34 im Getriebegehäuse 4 gelagert.

Der Planetenträger 10 weist auf.der der Abtriebswelle 12 gegenüber liegenden Seite des Planetengetriebes 8 einen Fortsatz 36 auf, an dem der Planetenträger 10 durch ein Rollenlager 38 im Getriebegehäuse 4, gelagert ist. Auch eine Vorgelegewelle 40 des Hauptgetriebes 6 ist durch eine Lagerung 42 im Getriebegehäuse 4 gelagert. Die Hauptwelle 44 des Hauptgetriebes 6 trägt an ihrem Ende ein Zahnrad 46 der Rückwärtsgangübersetzung. Das Zahnrad 46 ist auf der Hauptwelle 44 mit leichtem radialen Spiel angeordnet, was für ein Schaltgetriebe mit einer Leistungsverzweigung auf zwei Vorgelegewellen typisch ist. Am Ende der Hauptwelle 44 ist ein Zapfen 45 vorgesehen, der ein geschlitztes Profil aufweist. Der Zapfen 45 umfasst einen Druckbolzen 48, der von einer Feder 50 radial nach außen gedrückt wird. Dabei ragt der Druckbolzen durch das Sonnenrad 52 des Planetengetriebes 8 hindurch, das auf dem Zapfen 45 der Hauptwelle 44 angeordnet ist, wobei sich die Hauptwelle 44 im Sonnenrad 52 abstützt. Zwischen dem Sonnenrad 52 und der Abtriebswelle 12 bzw. dem Planetenträger 10 ist eine Hülse 54 mit einer Scheibe angeordnet, die eine Anlage und ein aneinander Gleiten des Sonnenrades 52 an der Abtriebswelle 12 erlaubt, wobei die Drehzahlen des Sonnenrades 52 und der Abtriebswelle 12 unterschiedlich sein können.

Auf dem Sonnenrad 52 sind zwei Druckkämme 56 und 58 angeordnet, die eine axiale Bewegung des Planetenrades 20 relativ zum Sonnenrad 52 verhindern, aber eine Anlage des Planetenrades 20 an die Druckkämme erlauben, um eine axial gerichtete Kraft aufzunehmen, die aus einer Schrägverzahnung des Planetengetriebes 8 resultiert. Zwei weitere Druckkämme 60 und 62 sind radial innerhalb des Hohlrades 24 angeordnet und erlauben.ebenfalls eine Anlage des Planetenrades 20. Die beiden Druckkämme 60 und 62 verhindern eine axiale Bewegung des Planetenrades 20 relativ zum Hohlrad 24. Durch die Anordnung der Druckkämme 56, 58, 60 und 62 bewegen sich Sonnenrad 52, Planetenrad 20 und Hohlrad 24 axial als ein Paket, wobei eine über das Sonnerad 52 eingeleitete Axialbewegung, durch die Übertragung über das Planetenrad 20, in einer gleichgerichteten Axialbewegung des Hohlrades 24 resultiert.

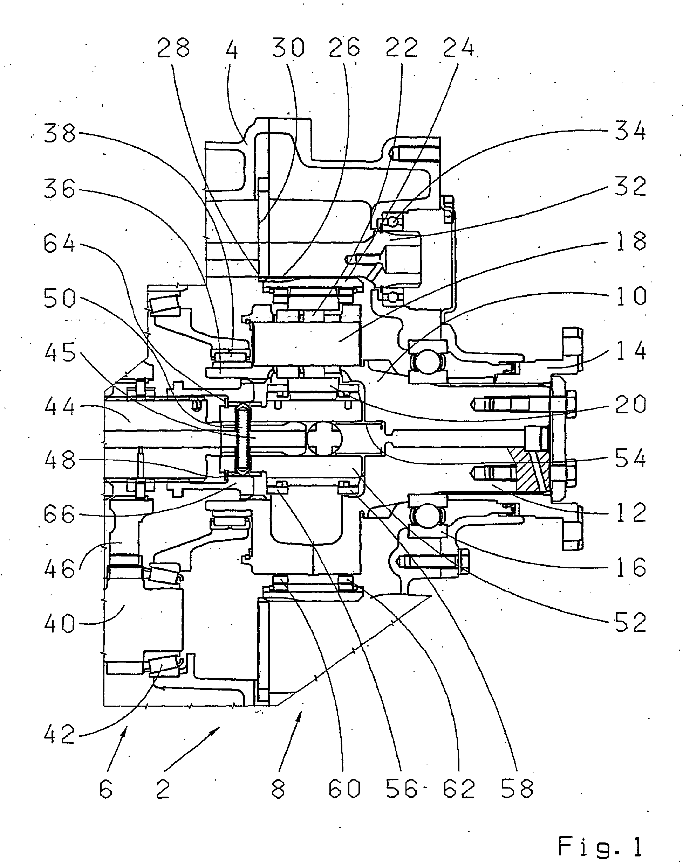

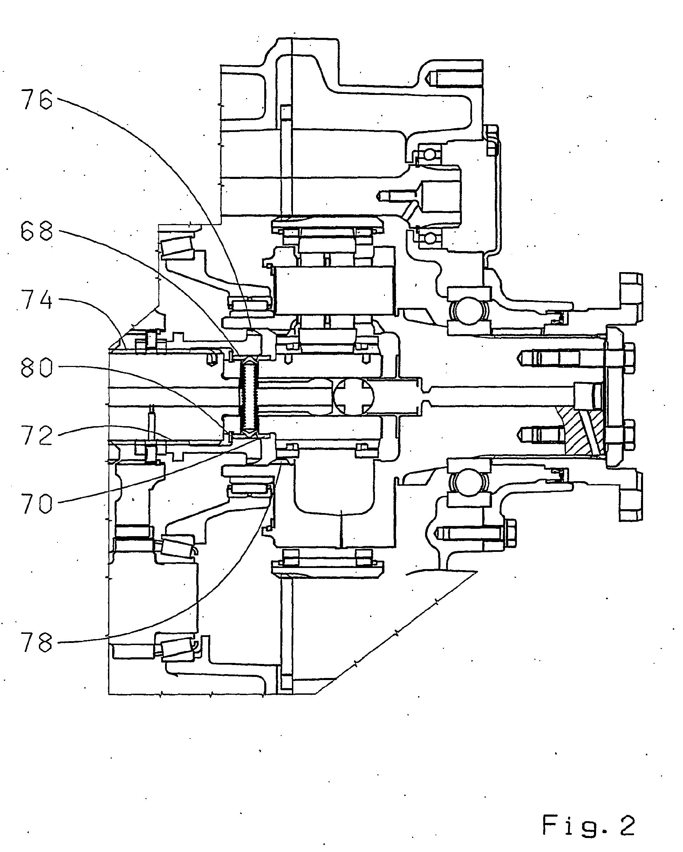

In der Fig. 1 wirkt der Druckbolzen 48 mit einer Raste 64 in einer Schiebemuffe 66 zusammen und greift dabei in der Raste 64 ein. Dadurch wird die Schiebemuffe 66 in einer Neutralstellung gehalten. Die Schiebemuffe 66 weist eine erste Innenverzahnung 68 auf, die in eine Außenverzahnung 70 auf dem Sonnenrad 52 eingreift und eine drehfeste Verbindung zwischen der Schiebemuffe 66 und dem Sonnenrad 52 herstellt (Fig. 2). Zur Bildung einer Drehfesten Verbindung zwischen der Schiebemuffe 66 und der Hauptwelle 44 weist.die Schiebemuffe 66 eine zweite Innenverzahnung 72 auf, die in eine Außenverzahnung 74 an der Hauptwelle 44 eingreift.

Zur Herstellung einer wahlweise drehfesten Verbindung der Hauptwelle 44 mit dem Planetenträger 10 zur Bildung einer direkten Verbindung des Hauptgetriebes 6 mit der Abtriebswelle 12 bei gleichbleibender Drehzahl weist die Schiebemuffe 66 eine Schaltverzahnung 76 auf, die in.eine Schaltverzahnung 78 am Fortsatz 36 des Planetenträgers 10 eingreifen kann.

Die Fig. 1 stellt das Planetengetriebe 8 in einer Neutralstellung dar. Weder die Schaltverzahnungen 26 und 28, noch die Schaltverzahnungen 76 und 78 greifen ineinander. Der Druckbolzen 48 greift in die Raste 64 an der Schiebemuffe 66 ein. Das Sonnenrad 52 befindet sich in seiner in der Zeichnungsebene rechten Position. Das Planetenrad 20 ist auf dem Planetenbolzen 18 nur auf einem Zylinderrollenlager der Rollenlagerung 22 gelagert. Das Planetengetriebe 8 ist lastfrei, daher genügt eine einfache Lagerung, die geringere Verluste verursacht.

Wird nun die Schiebemuffe 66 von einem hier nicht gezeigten Aktuator nach links verschoben, so zieht die Schiebemuffe 66 über einen Ring 80 das Sonnenrad 52 ebenfalls nach links in der Zeichnungsebene. Das ist in der Fig. 2 dargestellt. Das Planetenrad 20 wird über die Druckkämme 56 und 58 am Sonnenrad 52 mitgezogen und.zieht seinerseits über die Druckkämme 60 und 62 das Hohlrad 24 nach links. Dadurch greifen die beiden Schaltverzahnungen 26 und 28 ineinander, wodurch das Hohlrad 24 drehfest festgehalten wird. Dadurch dreht sich in bekannter Weise der Planetenträger 10 gegenüber der Hauptwelle 44 in einer langsameren Übersetzung. Jetzt läuft das Planetengetriebe 8 unter Last, weil das gesamte Drehmoment jetzt über das Planetenrad 20 übertragen wird. Dazu muss die Lagerung des Planetenrades 20 auf dem Planetenbolzen 18 unterstützt werden. Bei der Verschiebung des Planetenrades 20 nach links durch das Sonnenrad 52 wir das Planetenrad auch auf das zweite Zylinderrollenlager der Rollenlagerung 22 gezogen, so dass jetzt eine deutlich vergrößerte Tragfähigkeit der Rollenlagerung 22 zur Verfügung steht. Anstatt mehrerer Zylinderrollenlager kommt auch ein mehrreihiges Lager in Betracht, beispielsweise ein zweireihiges Nadellager.

Wird nun die Schiebemuffe 66 aus der in der Fig. 2 gezeigten Schaltstellung von dem Aktuator nach rechts verschoben, so schiebt die Schiebemuffe 66 über die Raste 64 und den Druckbolzen 48 das Sonnenrad 52 ebenfalls nach rechts in der Zeichnungsebene. Das Planetenrad 20 wird über die Druckkämme 56 und 58 am Sonnenrad 52 mitgeschoben und schiebt seinerseits.über die Druckkämme 60 und 62 das Hohlrad 24 nach rechts bis die Neutrallage nach Fig. 1 erreicht wird und das Sonnenrad 52 mit der Hülse 54 am Planetenträger 10 anliegt.

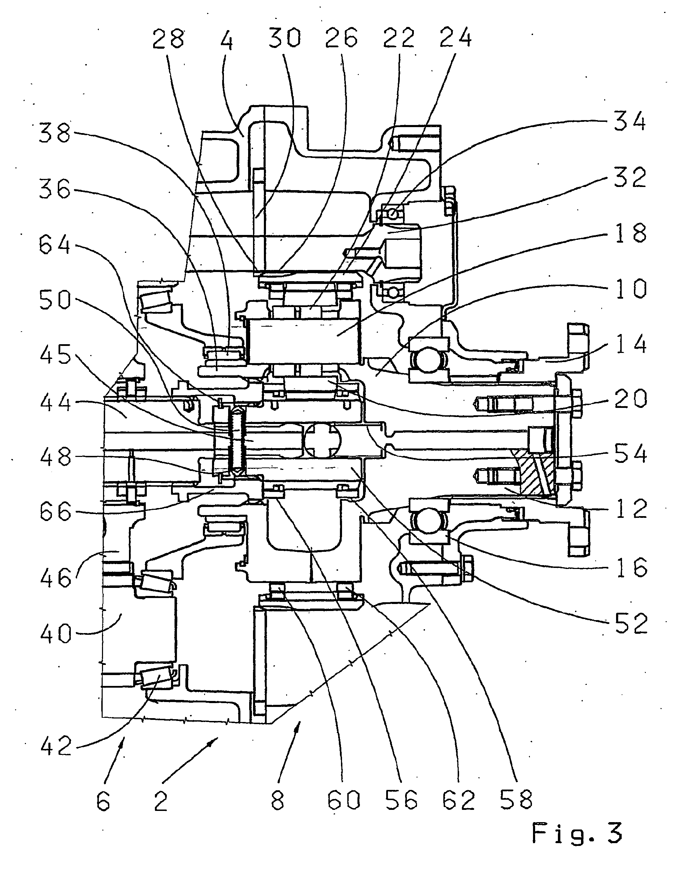

Wird die Schiebemuffe 66 aus der Neutrallage nach Fig.1 nach rechts verschoben, so wird von der Raste 64 die Feder 50 am Druckbolzen 48 überdrückt und die Schiebemuffe 66 bewegt sich weiter nach rechts ohne dass dabei das Sonnenrad 52 axial verschoben wird. Dadurch legt das Sonnenrad 52 und damit das Planetenrad 20 einen geringeren Verschiebeweg zurück als die das Sonnenrad 52 und damit das Planetenrad 20 verschiebende Schiebemuffe 66. Die Schaltverzahnung 76 an der Schiebemuffe 66 greift in die Schaltverzahnung 78 am Fortsatz 36 des Planetenträgers 10 ein, wodurch eine drehfeste Verbindung zwischen der Hauptwelle 44 und der Abtriebswelle 12 erreicht wird. Dies ist in der Fig. 3 dargestellt. Dadurch dreht sich in bekannter Weise der Planetenträger 10 gegenüber der Hauptwelle 44 mit der gleichen Drehzahl. Jetzt läuft das Planetengetriebe 8 lastfrei, weil das gesamte Drehmoment über den Planetenträger 10 übertragen wird. Die Lagerung des Planetenrades 20 auf dem Planetenbolzen 18 muss nicht unterstützt werden, so dass das Planetenrad 20 wie in der Neutrallage nur auf einem Zylinderrollenlager der Rollenlagerung 22 getragen wird.

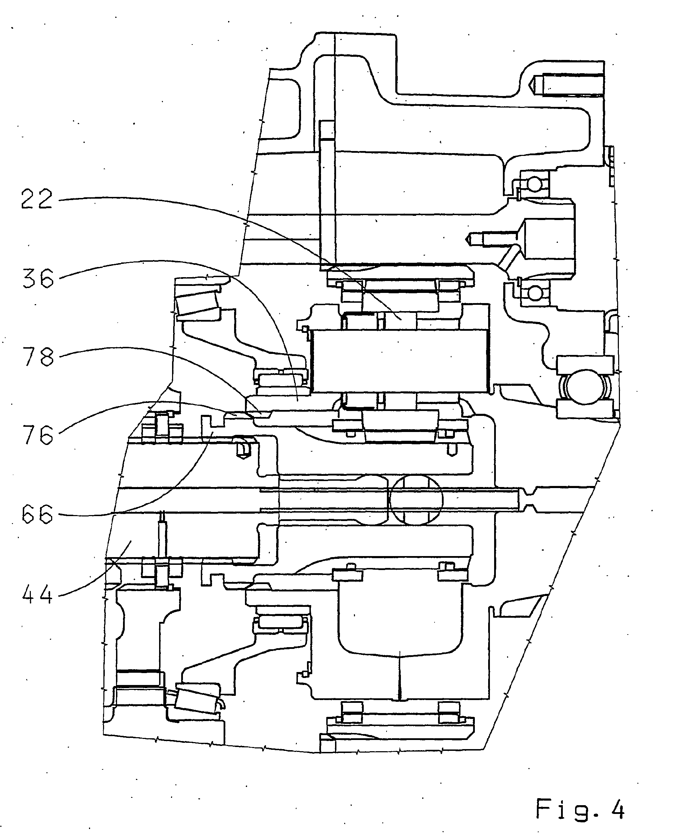

Die Fig. 4 zeigt eine geänderte Ausführung der Schiebemuffe 66. Die Schiebemuffe 66 ist hier einteilig mit dem Sonnenrad ausgebildet. In dieser Anordnung wird bei einer axialen Verschiebung der Schiebemuffe 66 in die drei möglichen Schaltstellungen immer das Sonnenrad und damit das Planetenrad 20 und das Hohlrad 24 mitgeführt. Dafür muss entsprechender Bauraum im Planetengetriebe 8 verfügbar sein.

Das Erreichen der langsamen Übersetzung erfolgt entsprechend wie zu Fig. 2 beschrieben. Durch die einteilige Ausbildung von Schiebemuffe 66 und Sonnenrad entfällt der Druckbolzen und die Raste. Wird nun.die Schiebemuffe 66 aus der Schaltstellung für die langsame Übersetzung vom Aktuator nach rechts verschoben, so verschiebt die Schiebemuffe 66 das mit ihr einteilige Sonnenrad ebenfalls nach rechts in der Zeichnungsebene. Das Planetenrad 20 wird über die Druckkämme 56 und 58 am Sonnenrad mitgeschoben und schiebt seinerseits über die Druckkämme 60 und 62 das Hohlrad 24 nach rechts bis die Neutrallage nach Fig. 4 erreicht wird. Das Sonnenrad liegt jetzt nicht am Planetenträger 10 an.

Wird die Schiebemuffe 66 aus der Neutrallage nach Fig.4 weiter nach rechts verschoben, so verschiebt die Schiebemuffe 66 auch das Sonnenrad axial weiter nach rechts. Die Schaltverzahnung 76 an der Schiebemuffe 66 greift in die Schaltverzahnung 78 am Fortsatz 36 des Planetenträgers 10 ein, wodurch eine drehfeste Verbindung zwischen der Hauptwelle 44 und der Abtriebswelle 12 erreicht wird. Das Planetengetriebe 8 läuft wieder lastfrei, weil das gesamte Drehmoment über den Planetenträger 10 übertragen wird. Die Lagerung des Planetenrades 20 auf dem Planetenbolzen 18 muss nicht unterstützt werden, so dass das Planetenrad 20 wie in der Neutrallage nur auf einem Zylinderrollenlager der Rollenlagerung 22 getragen wird.

Zur Bildung einer stabilen Endlage und zur Vermeidung eines ungewollten Auseinandergleitens können die Verzahnungen 26, 28 und 68 bis 78 mit einer Hinterrollung versehen sein.

Durch die erfindungsgemäße Anordnung wird eine klauengeschaltete Schalteinrichtung für ein Planetengetriebe gebildet, die auf der Hauptwelle des Getriebes angeordnet ist. Die Schaltung der schnellen Übersetzung des Gruppengetriebes bei direkter Verbindung erfolgt lastfrei. Die kurzen Schaltwege der Verzahnungen am Bereichsgruppengetriebe ermöglichen kurze Biegehebel an den Planetenbolzen. Rollenlager tragen die Planetenräder sicher auf den Planetenbolzen.

Grundsätzlich ist die erfindungsgemäße Schalteinrichtung sowohl für Schaltgetriebe mit einer Vorgelegewelle, als auch für Schaltgetriebe mit einer Leistungsverzweigung auf mehrere Vorgelegewellen geeignet.

### Bezugszeichen

- 2: Schaltgetriebe
- 4: Getriebegehäuse
- 6: Hauptgetriebe
- 8: Planetengetriebe
- 10: Planetenträger
- 12: Abtriebswelle
- 14: Abtriebsflansch
- 16: Lagerung
- 18: Planetenbolzen
- 20: Planetenrad
- 22: Rollenlagerung
- 24: Hohlrad
- 26: Schaltverzahnung
- 28: Schaltverzahnung
- 30: Abstützplatte
- 32: Welle
- 34: Lagerung
- 36: Fortsatz
- 38: Rollenlager
- 40: Vorgelegewelle
- 42: Lagerung
- 44: Hauptwelle
- 45: Zapfen
- 46: Zahnrad
- 48: Druckbolzen
- 50: Feder
- 52: Sonnenrad
- 54: Hülse
- 56: Druckkamm
- 58: Druckkamm
- 60: Druckkamm
- 62: Druckkamm
- 64: Raste
- 66: Schiebemuffe
- 68: Innenverzahnung
- 70: Außenverzahnung
- 72: Innenverzahnung
- 74: Außenverzahnung
- 76: Schaltverzahnung
- 78: Schaltverzahnung
- 80: Ring

## Patentansprüche

1. Planetengetriebe (8), das ein Hohlrad (24), ein Sonnenrad (52) und einen Planetenträger (10) umfasst, auf dem wenigstens ein Planetenrad (20) gelagert ist, und das eine Schalteinrichtung mit einer Schiebemuffe (66) aufweist, die in einer Schaltstellung eine direkte Verbindung zwischen einer das Planetengetriebe (8) antreibenden Welle (44) und einer Ausgangswelle (12) des Planetengetriebes (8) ermöglicht und die in einer anderen Schaltstellung eine Drehzahländerung zwischen der antreibenden Welle (44) und der Ausgangswelle (12) des Planetengetriebes (8) ermöglicht, **dadurch gekennzeichnet, dass** das Planetenrad (20) auf dem Planetenträger (10) derart gelagert ist, dass bei einer Schaltung von der einen Schaltstellung in die jeweils andere Schaltstellung das Planetenrad (20) auf dem Planetenträger (20) axial verschiebbar ist.

2. Planetengetriebe (8) nach Anspruch 1, **dadurch gekennzeichnet, dass** das Planetenrad (20) relativ zu dem Hohlrad (24) und zu dem Sonnenrad (52) axial fixiert ist, so dass eine axiale Verschiebung des Planetenrades (20) eine gleichzeitige axiale Verschiebung von Hohlrad (24) und Sonnenrad (52) ermöglicht.

3. Planetengetriebe (8) nach Anspruch 1 oder 2, **dadurch gekennzeichnet, dass** die Schiebemuffe (66) geeignet ist, das Sonnenrad (52) axial zu bewegen und damit das Planetenrad (20) auf dem Planetenträger (10) axial zu verschieben.

4. Planetengetriebe (8) nach einem der Ansprüche 1 bis 3, **dadurch gekennzeichnet, dass** bei einer Verschiebung des Planetenrades (20) von der einen Schaltstellung in die jeweils andere Schaltstellung das Planetenrad (20) einen geringeren Verschiebeweg zurücklegt als die das Planetenrad (20) verschiebende Schiebemuffe (66).

5. Planetengetriebe (8) nach einem der Ansprüche 1 bis 4, **dadurch gekennzeichnet, dass** das Sonnenrad (52) einen Druckbolzen (48) umfasst, der mit der Schiebemuffe (66) zusammenwirkt.

6. Planetengetriebe (8) nach einem der Ansprüche 1 bis 3, **dadurch gekennzeichnet, dass** die Schiebemuffe (66) und das Sonnenrad einteilig ausgebildet sind.

7. Planetengetriebe (8) nach einem der Ansprüche 1 bis 6, **dadurch gekennzeichnet, dass** sowohl das Hohlrad (24) als auch das Sonnenrad (52) Druckkämme (56, 58, 60, 62) aufweisen, die an dem Planetenrad (20) anliegen.

8. Planetengetriebe (8) nach einem der Ansprüche 1 bis 7, **dadurch gekennzeichnet, dass** die Schalteinrichtung eine Neutralstellung aufweist, die zwischen den beiden Schaltstellungen liegt und bei der die Ausgangswelle (12) des Planetengetriebes (8) nicht angetrieben wird.

9. Planetengetriebe (8) nach einem der Ansprüche 1 bis 8, **dadurch gekennzeichnet, dass** das Planetenrad (20) auf dem Planetenträger (10) in einer Rollenlagerung (22) gelagert ist.

10. Planetengetriebe (8) nach Anspruch 9, **dadurch gekennzeichnet, dass** die Rollenlagerung (22) ein mehrreihiges Lager umfasst.

11. Planetengetriebe (8) nach einem der Ansprüche 1 bis 10, **dadurch gekennzeichnet, dass** das Sonnenrad (52) und die antreibende Welle (44) des Planetengetriebes (8) relativ zueinander gelagert sind.

12. Planetengetriebe (8) nach einem der Ansprüche 1 bis 11, **dadurch gekennzeichnet, dass** die Lagerung des Ende der Hauptwelle (44) einen Zapfen (45) mit einem geschlitzten Profil umfasst.

13. Planetengetriebe (8) nach einem der Ansprüche 1 bis 12, **dadurch gekennzeichnet, dass** das Planetengetriebe (8) ein Bereichsgruppengetriebe eines Fahrzeuggetriebes darstellt, das in einem drehmomentübertragenden Antriebsstrang an ein Hauptgetriebe (6) angeschlossen ausgebildet ist und bei dem die Ausgangswelle (44) des Hauptgetriebes (6) die antreibende Welle des Planetengetriebes (8) bildet.

14. Planetengetriebe (8) nach einem der Ansprüche 1 bis 8, **dadurch gekennzeichnet, dass** das Hauptgetriebe (6) zwei Vorgelegewellen (40) und eine schwimmend zwischen den Vorgelegewellen (40) gelagerte Hauptwelle (44) umfasst, die als Ausgangswelle des Hauptgetriebes (6) die antreibende Welle.des Planetengetriebes (8) bildet und die an ihrem Ende (46) im Sonnenrad (52) des Planetengetriebes (8) gelagert ist.

## Claims

1. The invention relates to a planetary transmission (8) comprising a sun gear (52) and a planet carrier (10), which supports at least one planet gear (20), and also featuring a shifting component with a sliding sleeve (66), which in one shifting position permits a direct connection between a shaft (44) driving the planetary transmission (8) and an output shaft (12) of the planetary transmission (8) and which in an other shifting position permits the speed to be changed between the driving shaft (44) and the output shaft (12) of the planetary transmission (8), **characterized in that** the planet gear (20) is supported on the planet carrier (10) in such a way that during changeover from one shifting position to the other, the planet gear (20) is axially displaceable on the planet carrier (10).

2. A planetary transmission (8) according to claim 1, **characterized in that** the planet gear (20) is axially fixed in relation to the ring gear (24) and the sun gear (52), so that axial displacement of the planet gear (20) permits simultaneous axial displacement of ring gear (24) and sun gear (52).

3. A planetary transmission (8) according to claim 1 or 2, **characterized in that** the sliding sleeve (66) is capable of moving the sun gear (52) axially and thus of axially displacing the planet gear (20) on the planet carrier (10).

4. A planetary transmission (8) according to one of the claims 1 through 3, **characterized in that** when the planet gear (20) is moved from one shifting position to the other, it covers a shorter distance than the sliding sleeve (66) displacing the planet gear (20).

5. A planetary transmission (8) according to one of the claims 1 through 4, **characterized in that** the sun gear (52) comprises a pressure bolt (48) which interacts with the sliding sleeve (66).

6. A planetary transmission (8) according to one of the claims 1 through 3, **characterized in that** the sliding sleeve (66) and the sun gear form a single-piece component.

7. A planetary transmission (8) according to one of the claims 1 through 6, **characterized in that** ring gear (24) and sun gear (52) feature pressure cogs (56, 58, 60, 62) which are contiguous to the planet gear (20).

8. A planetary transmission (8) according to one of the claims 1 through 7, **characterized in that** the shifting component features a neutral position, which is located between the two shifting positions and in which the output shaft (12) of the planetary transmission (8) is not driven.

9. A planetary transmission (8) according to one of the claims 1 through 8, **characterized in that** the planet gear (20) is supported in a roller bearing (22) on the planet carrier (10).

10. A planetary transmission (8) according to claim 9, **characterized in that** the roller bearing (22) comprises a bearing of several rows.

11. A planetary transmission (8) according to one of the claims 1 through 10, **characterized in that** the sun gear (52) and the driving shaft (44) of the planetary transmission (8) are supported in relation to each other.

12. A planetary transmission (8) according to one of the claims 1 through 11, **characterized in that** the bearing of the end of the main shaft (44) features a stud (45) with a slotted profile.

13. A planetary transmission (8) according to one of the claims 1 through 12, **characterized in that** the planetary transmission (8) is a range-change transmission of an automotive transmission, and that it is connected within a torque-transmitting driveline to a main transmission (6), and that the output shaft (44) of the main transmission (6) forms the driving shaft of the planetary transmission (8).

14. A planetary transmission (8) according to one of the claims 1 through 8, **characterized in that** the main transmission (6) comprises two countershafts (40) and between the countershafts (40) as output shaft of the main transmission (6) a floating main shaft (44), which forms the driving shaft of the planetary transmission (8) and at its end (46) is supported in the sun gear (52) of the planetary transmission (8).

## Revendications

1. Boîte de vitesses épicycloïdale (8), comprenant une couronne (24), une roue solaire (52) et un arbre porte-satellites (10), sur lequel est logé au moins un satellite (20), et comportant un dispositif de changement de vitesses avec un manchon coulissant (66), lequel, dans une position de commande permet d'établir un lien direct entre un arbre (44) entraînant la boîte de vitesses épicycloïdale (8) et un arbre de sortie (12) de la boîte de vitesses épicycloïdale (8) et lequel permet de réaliser dans une autre position de commande une variation de la vitesse de rotation entre l'arbre menant (44) et l'arbre de sortie (12) de la boîte de vitesses épicycloïdale (8), **caractérisée en ce que** le satellite (20) sur l'arbre porte-satellites (10) est logé de manière à ce que lors d'un passage d'une position de commande vers l'autre position de commande le satellite (20) peut être déplacé axialement sur l'arbre porte-satellites (20).

2. Boîte de vitesses épicycloïdale (8) selon la revendication 1, **caractérisée en ce que** le satellite (20) est fixé axialement par rapport à la couronne (24) et à la roue solaire (52) de manière à ce qu'un déplacement axial du satellite (20) permet à la fois un déplacement axial de la couronne (24) et de la roue solaire (52).

3. Boîte de vitesses épicycloïdale (8) selon la revendication 1 ou 2, **caractérisée en ce que** le manchon coulissant (66) est approprié à déplacer axialement la roue solaire (52) et ainsi à déplacer axialement le satellite (20) sur l'arbre porte-satellites (10).

4. Boîte de vitesses épicycloïdale (8) selon les revendications 1 à 3, **caractérisée en ce que** en cas de déplacement du satellite (20) de l'une position de commande vers l'autre position de commande et vice versa, le satellite (20) parcourt une course de déplacement plus faible que celle parcourue par le manchon coulissant (66) déplaçant le satellite (20).

5. Boîte de vitesses épicycloïdale (8) selon les revendications 1 à 4, **caractérisée en ce** la roue solaire (52) comprend un boulon de pression (48) coopérant avec le manchon coulissant (66).

6. Boîte de vitesses épicycloïdale (8) selon les revendications 1 à 3, **caractérisée en ce** le manchon coulissant (66) et la roue solaire sont réalisés en une pièce.

7. Boîte de vitesses épicycloïdale (8) selon les revendications 1 à 6, **caractérisée en ce que** soit la couronne (24) soit la roue solaire (52) comportent des peignes de pression (56, 58, 60, 62) qui adhèrent au satellite (20).

8. Boîte de vitesses épicycloïdale (8) selon les revendications 1 à 7, **caractérisée en ce que** le dispositif de changement de vitesses comporte une position de point mort se situant entre les deux positions de commande et dans laquelle l'arbre de sortie (12) de la boîte de vitesses épicycloïdale (8) n'est pas entraîné.

9. Boîte de vitesses épicycloïdale (8) selon les revendications 1 à 8, **caractérisée en ce que** le satellite (20) est logé dans une unité de paliers à rouleaux (22) sur l'arbre porte-satellites (10).

10. Boîte de vitesses épicycloïdale (8) selon la revendication 9, **caractérisée en ce que** l'unité de paliers à rouleaux (22) comprend un roulement à plusieurs rangées.

11. Boîte de vitesses épicycloïdale (8) selon les revendications 1 à 10, **caractérisée en ce que** la roue solaire (52) et l'arbre menant (44) de la boîte de vitesses des épicycloïdale (8) sont logés l'un par rapport à l'autre.

12. Boîte de vitesses épicycloïdale (8) selon les revendications 1 à 11, **caractérisée en ce que** le logement de l'extrémité de l'arbre principal (44) comprend un tourillon (45) avec un profil fendu.

13. Boîte de vitesses épicycloïdale (8) selon les revendications 1 à 12, **caractérisée en ce que** la boîte de vitesses épicycloïdale (8) représente un groupe-relais d'une boîte de vitesses pour un véhicule, lequel est lié - dans une chaîne cinématique transmettant le couple - à une boîte principale (6), sachant que l'arbre de sortie (44) de la boîte principale (6) forme l'arbre menant de la boîte de vitesses épicycloïdale (8).

14. Boîte de vitesses épicycloïdale (8) selon les revendications 1 à 8, **caractérisée en ce que** la boîte principale (6) comprend deux arbres intermédiaires (40) et un arbre principal (44) logé de manière flottante entre les arbres intermédiaires (40), celui-ci formant en tant qu'arbre de sortie de la boîte principale (6) l'arbre menant de la boîte de vitesses épicycloïdale (8) et lequel est logé avec son extrémité (46) dans la roue solaire (52) de la boîte de vitesses épicycloïdale (8).
